# EUROPEAN PATENT SPECIFICATION

(11) **EP 3 983 456 B1**
(45) Date of publication and mention of the grant of the patent: **15.04.2026**
(21) Application number: 20751755.8
(22) Date of filing: 12.06.2020
(51) Int. Cl.: C08F 210/06, B29C 64/153, B33Y 70/00, B33Y 80/00, B33Y 10/00

(54) **POLYPROPYLENE-BASED PARTICLES FOR ADDITIVE MANUFACTURING**
PARTIKEL AUF POLYPROPYLENBASIS ZUR GENERATIVEN FERTIGUNG
PARTICULES À BASE DE POLYPROPYLÈNE POUR LA FABRICATION ADDITIVE

(30) Priority: 14.06.2019 US 201962861856 P
(43) Date of publication of application: 20.04.2022
(73) Proprietor: 3D Systems, Inc., Rock Hill, SC 29730 (US)
(72) Inventor: SHIR, Meisam, Rock Hill, SC 29730 (US); MOUSSA, Khalil, Rock Hill, SC 29730 (US)
(74) Representative: dompatent
(86) International application number: PCT/US2020/037366
(87) International publication number: WO 2020/252224

(56) References cited:
- WO-A1-2019/197582
- CN-A- 103 980 401
- CN-A- 106 279 476
- JP-A- 2008 162 857

## Description

### FIELD

The present invention relates to a method of forming an article by providing a polypropylene-based powder composition and forming the powder composition into an article via an additive manufacturing technique.

### BACKGROUND

Additive manufacturing generally encompasses processes in which digital 3-dimensional (3D) design data is employed to fabricate an article or component in layers by material deposition and processing. Various techniques have been developed falling under the umbrella of additive manufacturing. Additive manufacturing offers an efficient and cost-effective alternative to traditional article fabrication techniques based on molding processes. With additive manufacturing, the significant time and expense of mold and/or die construction and other tooling can be obviated. Further, additive manufacturing techniques make an efficient use of materials by permitting recycling in the process and precluding the requirement of mold lubricants and coolant. Most importantly, additive manufacturing enables significant freedom in article design. Articles having highly complex shapes can be produced without significant expense allowing the development and evaluation of a series of article designs prior to final design selection.

CN 103980401 A discloses nanoparticle/polypropylene random copolymer compound resin for printing, a preparation method and an application thereof.

The nanoparticle/polypropylene random copolymer compound resin is obtained in a manner that propylene and a comonomer are subjected to a copolymerization reaction catalyzed by a catalyst including a nanoparticle carrier type catalyst.

CN 106279476 A discloses an ultra-high molecular weight (UHMW) propene polymer powder with superfine grain size and a preparation method thereof.

JP 2008-162857 suggests that ion-exchangeable layered silicate particles are prepared by a method of manufacturing ion-exchangeable layered silicate particles characterized by including a first granulation process for manufacturing granules by granulating the ion-exchangeable layered silicate, and a second granulation process for pulverizing the granules prepared in the first granulation process and re-granulating them, to manufacture granules.

US 2004/0122196 A1 discloses a polypropylene resin having a M_{w}/Mₙ of less than 5, a melt flow rate of less than 7g/10 min, a 1% secant flexural modulus of greater than 300,000 psi and less than 2% by weight xylene solubles, as well as a composition comprising this resin.

WO 2019/197582 A1 refers to a 3D printed article comprising a 3D printable composition comprising at least 90% by weight of polypropylene, based on the total weight of the 3D printable composition.

### SUMMARY

The present invention refers to a method of forming articles according to claim 1. Preferred embodiments are disclosed in claims 2 to 7. A method of forming an article comprises
providing a powder composition including particles of copolymer or terpolymer having a spherical shape, spheroidal shape, or a mixture of spherical and spheroidal shapes, the copolymer or terpolymer comprising one or more alkene monomeric species in an amount of 4 to 10 molar percent and the balance polypropylene; wherein the particles have an aspect ratio of 0.5 to 1 ; wherein the monomeric alkene species are selected from the group consisting of ethylene, butene and 1-octene, and wherein the copolymer or terpolymer is random copolymer or random terpolymer, and wherein a difference between melting temperature and crystallization temperature of the copolymer or terpolymer is less than 45 °C, determined according to differential scanning calorimetry (DSC); and
forming the powder composition into the article via an additive manufacturing technique.

In some embodiments, the additive manufacturing technique is a powder bed fusion technique. The article can exhibit tensile strength of 18-23 MPa and/or elongation at breakage greater than 70 percent, in some embodiments.

These and other embodiments are further described in the following detailed description.

### DETAILED DESCRIPTION

Embodiments described herein can be understood more readily by reference to the following detailed description and examples and their previous and following descriptions.

In one aspect, a powder composition used in the method of the invention comprises particles of copolymer or terpolymer having a spherical shape, spheroidal shape, or a mixture of spherical and spheroidal shapes, the copolymer or terpolymer comprising one or more alkene monomeric species and the balance polypropylene. The particles have an aspect ratio of 0.5-1. The spherical and/or spheroidal particles may also have an aspect ratio of 0.6-1, 0.7-1 or 0.8-1, in some embodiments.

The one or more alkene monomeric species of copolymer or terpolymer forming the particles, in some embodiments, can be selected according to various considerations including, but not limited to, altering the surface energies of the particles and/or polymer chain structure to promote particle coalescence in additive manufacturing techniques, including sintering. Any alkene monomeric species consistent with the objectives of enhancing one or more properties of articles produced by additive manufacturing can be employed. The alkene monomeric species for copolymerization with propylene monomer are selected from the group consisting of ethylene, butene and 1-octene. Any combination of alkene monomeric species with propylene monomer for particle formation is contemplated. The copolymer or terpolymer of the particles has an random structure and does not include formation of block copolymer or block terpolymer. Additionally, the copolymer or terpolymer can be linear or substantially linear. In being substantially linear, the copolymer or terpolymer has less than 1 percent branching.

The alkene monomeric species are present in the copolymer or terpolymer in an amount of 4 to 10 molar percent
Specific amounts of alkene monomer can be selected according to several considerations including, but not limited to, identity of the alkene monomeric species, desired copolymer or terpolymer structure, and/or particle surface energy. Moreover, the copolymer or terpolymer can have a M_{w}/Mₙ ratio of 1.2 to 5, in some embodiments.

Particles comprising copolymer or terpolymer disclosed herein to be used in the method of the present invention can exhibit various thermal properties and/or phase transition properties facilitating formation of articles with advantageous mechanical properties via additive manufacturing techniques, including powder bed fusion techniques. In some embodiments, copolymer or terpolymer of alklyene monomer and propylene forming the particles has a crystallization temperature less than 100 °C. Crystallization temperature of the copolymer or terpolymer, for example, can range from 90-95 °C. Copolymer or terpolymer of the particles exhibits a difference between melting temperature and crystallization temperature (Tₘ - T_{c}) of less than 45 °C or less than 40 °C. In some embodiments, Tₘ - T_{c} ranges from 30-45 °C. Melting and crystallization temperature of the copolymer and terpolymer are determined according to differential scanning calorimetry (DSC).

In addition to copolymer or terpolymer composition and structure, the spherical and/or spheroidal particles of the powder may also exhibit particle size distributions yielding additive manufactured articles having enhanced mechanical properties.

In some embodiments, the powder composition has an apparent density of at least 0.4 g/cm³. Apparent density of the powder composition can be 0.4-0.6 g/cm³. The powder composition can also exhibit a tap density of at least 0.5 g/cm³. In some embodiments, the powder composition has a tap density of 0.45-0.65 g/cm³. Additionally, the ratio of tap density to apparent density (Hausner ratio) of powder composition is 1.1 to 1.4, in some embodiments. The Hausner ratio can be less than 1.25, such as 1.1-1.2, for example. Apparent density and tap density of powder compositions described herein can be determined according to ASTM D1895-17.

Powder compositions having the foregoing compositions and/or properties can be produced according to various techniques including, but not limited to, solvent precipitation, spray forming, and/or pulverization, milling and shaping.

As described herein, the foregoing properties of the powder composition can be advantageous for producing articles having enhanced mechanical properties via additive manufacturing techniques. An article manufactured by an additive manufacturing technique, for example, comprises fused particles of copolymer or terpolymer comprising the one or more alkene monomeric species and the balance polypropylene. In some embodiments, the additively manufactured article has a tensile strength of 17-25 MPa or 18-23 MPa. Additionally, the article can exhibit a tensile modulus of at least 700 MPa. The article, for example, can exhibit a tensile modulus of 700-1100 MPa. The article can also exhibit an elongation at break greater than 50 percent or greater than 70 percent according to ASTM D638. In some embodiments, the article exhibits an elongation at break of at least 90 percent. Elongation at break of the article can also range from 95-110 percent, in some embodiments. Additionally, the article can have a heat deflection temperature of 30-90 °C.

Moreover, the article can have a notched impact strength greater than 35 J/m according to ASTM D256, in some embodiments. For example, the article can have a notched impact strength of 40 to 70 J/m.

Enhancements to particle coalescence in the additive manufacturing process provided by the composition and properties of the copolymer or terpolymer described herein can assist in producing one or more of the foregoing mechanical properties of the article. The article can be manufactured by any desired additive manufacturing technique. In some embodiments, the article is manufactured by a powder bed technique, such as selective laser sintering (SLS) or selected laser melting (SLM). Table II provides a summary of the foregoing properties an article can exhibit when formed from powder compositions described herein via an additive manufacturing technique, according to some embodiments.

**Table II - AM Article Properties**

| Property | Value |
|---|---|
| Tensile Strength | 18-25 MPa |
| Tensile Modulus | 700-1100 MPa |
| Elongation at break | 70 to > 100% |
| Notched impact strength | 35-70J/m |

Methods of forming articles are described. A method of forming an article according to the present invention comprises providing a powder composition including particles of copolymer or terpolymer, the copolymer or terpolymer comprising one or more alkene monomeric species and the balance polypropylene. The powder is formed into the article via an additive manufacturing technique. Powder compositions and the resultant articles of methods described herein can have any composition, architecture and/or properties described above, including the compositions and properties of Tables I and II. The particles of copolymer or terpolymer have a spherical shape, spheroidal shape, or a mixture of spherical and spheroidal shapes. Additionally, the additive manufacturing technique can be a powder bed technique, such as selective laser sintering (SLS) or selected laser melting (SLM).

These and other embodiments are further illustrated in the following examples.

### EXAMPLE 1 - Powder Composition

Random copolymer described herein comprising about 5 molar percent ethylene and the balance isotactic polypropylene was synthesized and formed into a powder composition via solvent pulverization. The random copolymer did not exhibit branching. The powder composition displayed the properties in Table III.

**Table III - Copolymer Powder Properties**

| Property | Value |
|---|---|
| D10 | 26 µm |
| D50 | 55 µm |
| D90 | 110 µm |
| T_{c} | 95°C |
| Tₘ | 129°C |

Individual copolymer particles exhibiting the properties of Table III had a spherical and/or spheroidal morphology.

### EXAMPLE 2 - Powder Composition

Random terpolymer described herein comprising about 3 molar percent ethylene, 3 molar percent butene, and the balance isotactic polypropylene was synthesized and formed into a powder composition via solvent pulverization. The terpolymer did not exhibit branching. The powder composition displayed the properties in Table IV.

**Table IV - Terpolymer Powder Properties**

| Property | Value |
|---|---|
| D10 | 28 µm |
| D50 | 62 µm |
| D90 | 112 µm |
| T_{c} | 95°C |
| Tₘ | 1 29°C |

Individual terpolymer particles exhibiting the properties of Table IV had a spherical and/or spheroidal morphology.

### EXAMPLE 3 - AM Articles

Tensile test bars and impact samples (notched and un-notched) were printed from powder compositions of Examples 1 and 2 on a sPro60 HD-HS SLS machine commercially available from 3D Systems of Rock Hill, SC. Tensile test bars and impact samples were also printed from comparative powder compositions 3-5 on the sPro60 HD-HS SLS machine. Compositional parameters of comparative powder compositions were as follows: Comparative powder 3 - solvent pulverized isotatic polypropylene Comparative powder 4 - solvent pulverized block copolymer comprising 6-10 molar percent ethylene and the balance polypropylene Comparative powder 5 - solvent pulverized copolymer of less than 2 molar percent ethylene with the balance polypropylene

Additional parameters of Comparative powders 3-5 are provided in Table V.

**Table V - Comparative powders 3-5**

| Property | Comparative Powder 3 | Comparative Powder 4 | Comparative Powder 5 |
|---|---|---|---|
| D10 | 23 µm | 22 µm | 25 µm |
| D50 | 55 µm | 52 µm | 65 µm |
| D90 | 112 µm | 102 µm | 115 µm |
| T_{c} | 116°C | 115°C | 104°C |
| Tₘ | 166°C | 168°C | 1 50°C |

### Comparative powders 3-5 exhibited a spherical and/or spheroidal morphology.

Print temperature and laser parameters of the sPro60 HD-HS SLS machine were optimized for each powder composition of Examples 1-2 and Comparative powders 3-5. Optimization was administered to achieve the highest mechanical properties for each printed article. All articles were printed in the XY plane and in accordance with the specifications set forth in the related ASTM. Results of the mechanical testing of the articles printed with each powder composition are provided in Table VI.

**Table VI - Article Mechanical Properties**

| Property | Ex. 1 | Ex. 2 | Comp. 3 | Comp. 4 | Comp. 5 |
|---|---|---|---|---|---|
| Tensile Modulus (MPa) | 900 | 1000 | 1200 | 1000 | 850 |
| Tensile Strength (MPa) | 20 | 21 | 12 | 12 | 16 |
| Elongation at Breakage (%) | >100 | >100 | 2 | 3 | 18 |
| Notched Impact (J/m) | 43 | 60 | 29 | 30 | 60 |

As provided in Table VI, the articles made according to the method of the present invention by using powder compositions described herein embodied in Examples 1 and 2 exhibited superior elongation at break, and impact and tensile strengths, while maintaining comparable tensile modulus values.

## Claims

1. A method of forming an article comprising:
providing a powder composition including particles of copolymer or terpolymer having a spherical shape, spheroidal shape, or a mixture of spherical and spheroidal shapes, the copolymer or terpolymer comprising one or more alkene monomeric species in an amount of 4 to 10 molar percent and the balance polypropylene; wherein the particles have an aspect ratio of 0.5 to 1; wherein the monomeric alkene species are selected from the group consisting of ethylene, butene and 1-octene, and wherein the copolymer or terpolymer is random copolymer or random terpolymer, and wherein a difference between melting temperature and crystallization temperature of the copolymer or terpolymer is less than 45 °C, determined according to differential scanning calorimetry (DSC); and
forming the powder composition into the article via an additive manufacturing technique.

2. The method of claim 1, wherein the particles have an aspect ratio of 0.7 to 1.

3. The method of claim 1 or 2, wherein the additive manufacturing technique is a powder bed fusion technique.

4. The method of claim 2, wherein the powder bed fusion technique is selective laser sintering or selective laser melting.

5. The method of claim 1, wherein the article has an elongation at break greater than 70 percent according to ASTM D638.

6. The method of claim 1, wherein the article has a notched impact strength greater than 40 J/m according to ASTM D256.

7. The method of claim 1, wherein the powder composition has an apparent density of 0.4-0.6 g/cm³.

## Patentansprüche

1. Verfahren zum Formen eines Artikels, umfassend:
das Bereitstellen einer Pulverzusammensetzung, die Teilchen eines Copolymers oder Terpolymers mit einer kugeligen Form, sphäroidalen Form oder einem Gemisch von kugeligen und sphäroidalen Formen umfasst, wobei das Copolymer oder Terpolymer eine oder mehrere monomere Alkenspezies in einer Menge von 4 bis 10 Molprozent und als Rest Polypropylen umfasst; wobei die Teilchen ein Aspektverhältnis von 0,5 bis 1 aufweisen; wobei die monomeren Alkenspezies aus der Gruppe ausgewählt sind, die aus Ethylen, Buten und 1-Octen besteht, und wobei das Copolymer ein statistisches Copolymer oder das Terpolymer ein statistisches Terpolymer ist und wobei die Differenz zwischen der Schmelztemperatur und Kristallisationstemperatur des Copolymers oder Terpolymers kleiner als 45°C ist, bestimmt durch dynamische Differenzkalorimetrie (DSC); und
Formen der Pulverzusammensetzung zu einem Artikel durch ein additives Fertigungsverfahren.

2. Verfahren gemäß Anspruch 1, wobei die Teilchen ein Aspektverhältnis von 0,7 bis 1 aufweisen.

3. Verfahren gemäß Anspruch 1 oder 2, wobei das additive Fertigungsverfahren ein pulverbettbasiertes Schmelzverfahren ist.

4. Verfahren gemäß Anspruch 2, wobei es sich bei dem pulverbettbasierten Schmelzverfahren um selektives Lasersintern oder selektives Laserschmelzen handelt.

5. Verfahren gemäß Anspruch 1, wobei der Artikel eine Bruchdehnung von mehr als 70% gemäß ASTM D638 aufweist.

6. Verfahren gemäß Anspruch 1, wobei der Artikel eine Kerbschlagzähigkeit von mehr als 40 J/m gemäß ASTM D256 aufweist.

7. Verfahren gemäß Anspruch 1, wobei die Pulverzusammensetzung eine scheinbare Dichte von 0,4-0,6 g/cm³ aufweist.

## Revendications

1. Procédé pour façonner un article, comprenant les étapes consistant à :
procurer une composition de poudre comprenant des particules d'un copolymère ou d'un terpolymère de forme sphérique, de forme sphéroïdale ou d'un mélange de formes sphérique et sphéroïdale, ledit copolymère ou terpolymère comprenant un ou plusieurs monomères d'alcène en une quantité de 4 à 10 % molaire, le reste étant constitué de polypropylène ; dans lequel les particules présentent un rapport d'aspect de 0,5 à 1 ; dans lequel les espèces d'akène monomères sont choisies dans le groupe consistant en éthylène, butène et 1-octène, et dans lequel le copolymère ou terpolymère est un copolymère aléatoire ou terpolymère aléatoire, et dans lequel la différence entre la température de fusion et la température de cristallisation dudit copolymère ou terpolymère est inférieure à 45 °C, déterminée par calorimétrie différentielle à balayage (DSC) ; et
façonner la composition de poudre en un article par un procédé de fabrication additive.

2. Procédé selon la revendication 1, dans lequel les particules présentent un rapport d'aspect de 0,7 à 1.

3. Procédé selon la revendication 1 ou 2, dans lequel ledit procédé de fabrication additive est un procédé de fusion sur lit de poudre.

4. Procédé selon la revendication 2, dans lequel ledit procédé de fusion sur lit de poudre est le frittage laser sélectif ou la fusion sélective par laser.

5. Procédé selon la revendication 1, dans lequel ledit article présente un allongement à la rupture supérieur à 70 pour cent selon ASTM D638.

6. Procédé selon la revendication 1, dans lequel ledit article présente une résistance au choc sur éprouvette entaillée supérieure à 40 J/m selon ASTM D256.

7. Procédé selon la revendication 1, dans lequel la composition de poudre présente une densité apparente de 0,4-0,6 g/cm³.
